# EUROPÄISCHE PATENTANMELDUNG

(11) **EP 1 555 051 A1**
(43) Veröffentlichungstag der Anmeldung: **20.07.2005**
(21) Anmeldenummer: 04000510.0
(22) Anmeldetag: 13.01.2004
(51) Int. Cl.: A63F 13/12

(54) **Verfahren zur Durchführung einer Veranstaltung mittels Mobilfunkendgeräten und einer Fernseh- oder Rundfunkstation**

(71) Anmelder: Blue Sky Entertainment B.V., 1075 HH Amsterdam (NL)
(72) Erfinder: Die Erfindernennung liegt noch nicht vor
(74) Vertreter: Manitz, Finsterwald & Partner GbR

(57) **Zusammenfassung**

Bei einem Verfahren zur Durchführung einer Gewinnveranstaltung mittels einer Fernseh- oder Rundfunkstation und Mobilfunkendgeräten, melden sich Teilnehmer unter Angabe von Daten zu ihrer Identität zur Teilnahme an der Gewinnveranstaltung an und es wird den Teilnehmern jeweils ein Identifikationscode zugewiesen, wobei die Identitätsdaten und/ oder der Identifikationscode in wenigstens einer Teilnehmerdatenstruktur in einer Auswerteeinrichtung abgespeichert werden. Es wird wenigstens eine Gewinnveranstaltungssendung von der Fernseh- oder Rundfunkstation übertragen und von den Teilnehmern empfangen. In wenigstens einem Gewinnveranstaltungsabschnitt in der Gewinnveranstaltungssendung wird wenigstens eine zu beantwortende Frage gestellt und Teilnehmer geben jeweils eine Antwort auf die Frage in ein Mobilfunkendgerät ein. Die Antworten werden mit dem jeweiligen Identifikationscode an die Auswerteeinrichtung übertragen. Die empfangenen Antworten werden zusammen mit der wenigstens näherungsweise erfassten Zeit ihrer Abgabe und/oder der Zeit ihres Empfangs und/oder Reihenfolge ihres Empfangs entsprechend dem Identifikationscode als Antwortdaten gespeichert. Nach einer vorgegebenen Zeit werden die gespeicherten Antwortdaten entsprechend der Qualität der jeweiligen Antwort und gegebenenfalls der jeweiligen Zeit der Abgabe und/oder der Zeit ihres Empfangs und/oder der Reihenfolge ihres Empfangs zur Ermittlung eines Gewinners ausgewertet.

## Beschreibung

Die vorliegende Erfindung betrifft ein Verfahren zur Durchführung einer interaktiven Gewinnveranstaltung mittels einer Fernseh- oder Rundfunkstation und Mobilfunkendgeräten.

Gewinnveranstaltungen in Verbindung mit Fernseh- oder Rundfunksendungen sind grundsätzlich bekannt. Beispielsweise können in einer Fernseh- oder Rundfunksendung Fragen gestellt werden, die dann von einem Kandidaten oder Teilnehmern im Studio richtig beantwortet werden müssen, um zu gewinnen. Zuschauer oder Zuhörer, die die Sendung verfolgen, bleiben dann von der Teilnahme an der Gewinnveranstaltung ausgeschlossen, so dass die Attraktivität einer solchen Sendung begrenzt ist.

Es können jedoch auch, beispielsweise im Radio, Gewinnveranstaltungen mit Zuhörern durchgeführt werden, bei denen eine zu beantwortende Frage gestellt wird, die dann ein Zuhörer telefonisch beantworten kann. Sollen mehrere Zuhörer teilnehmen, tritt das Problem auf, dass nach Bekanntgabe der ersten Antwort andere Teilnehmer bereits die richtige Antwort wissen oder dass die Teilnehmer unterschiedliche Fragen beantworten müssen und so nicht die gleichen Antwort- bzw. Teilnahmebedingungen vorfinden.

Der vorliegenden Erfindung liegt daher die Aufgabe zugrunde, ein Verfahren zur Durchführung einer Gewinnveranstaltung mittels einer Fernsehoder Rundfunksstation zu schaffen, an dem mehrere, vorzugsweise viele, Zuschauer oder Zuhörer gleichzeitig unter im Wesentlichen gleichen Teilnahmebedingungen und vorzugsweise in Echtzeit während einer Sendung in Bezug auf die Gewinnveranstaltung teilnehmen können.

Die Aufgabe wird nach einer ersten Alternative gelöst durch ein Verfahren zur Durchführung einer Gewinnveranstaltung mittels einer Fernseh- oder Rundfunkstation mit den Merkmalen des Anspruchs 1.

Bei dem erfindungsgemäßen Verfahren zur Durchführung einer Gewinnveranstaltung mittels einer Fernseh- oder Rundfunkstation und Mobilfunkendgeräten nach der ersten Alternative melden sich Teilnehmer unter Angabe von Daten zu ihrer Identität zur Teilnahme an der Gewinnveranstaltung an und es wird den Teilnehmern jeweils ein Identifikationscode zugewiesen, wobei die Identitätsdaten und/oder der Identifikationscode in wenigstens einer Teilnehmerdatenstruktur in einer Auswerteeinrichtung abgespeichert werden. Es wird wenigstens eine Gewinnveranstaltungssendung von der Fernseh- oder Rundfunkstation übertragen und von den Teilnehmern empfangen. In wenigstens einem Gewinnveranstaltungsabschnitt in der Gewinnveranstaltungssendung wird wenigstens eine zu beantwortende Frage gestellt und Teilnehmer geben jeweils eine Antwort auf die Frage in ein Mobilfunkendgerät ein. Die Antworten werden mit dem jeweiligen Identifikationscode an die Auswerteeinrichtung über ein Kommunikationsnetz übertragen, wobei jeweils zwischen Anmeldung und letzter Antwort eines Teilnehmers während der Gewinnveranstaltungssendung oder erster Antwort und letzter Antwort eines Teilnehmers während der Gewinnveranstaltungssendung kontinuierlich eine Datenverbindung von dessen Mobilfunkendgerät in das Kommunikationsnetz besteht, mit dem die Auswerteeinrichtung verbunden ist. Die empfangenen Antworten werden zusammen mit der wenigstens näherungsweise erfassten Zeit ihrer Abgabe und/oder der Zeit ihres Empfangs und/oder der Reihenfolge ihres Empfangs entsprechend dem Identifikationscode als Antwortdaten in der Auswerteeinrichtung gespeichert. Nach einem vorgegebenen Zeitpunkt werden die gespeicherten Antwortdaten entsprechend der Qualität der jeweiligen Antwort und gegebenenfalls der jeweiligen Zeit der Abgabe und/oder der Zeit ihres Empfangs und/oder der Reihenfolge ihres Empfangs zur Ermittlung wenigstens eines Gewinners ausgewertet.

Bei dem erfindungsgemäßen Verfahren wird zum einen eine Fernseh- oder Rundfunkstation verwendet, die insbesondere ein Studio mit Einrichtungen zur Aufnahme von Fernseh- und/oder Hörfunksendungen sowie Sendeeinrichtungen zur Ausstrahlung von Fernseh- und/oder Hörfunksendungen umfassen kann. Die Fernseh- und/ oder Hörfunksendungen können dabei auf beliebigen Wegen, beispielsweise über terrestrischen Funk, über Satellit oder auch Kabel übertragen werden.

Zur Auswertung der Antworten wird weiterhin eine Auswerteeinrichtung verwendet, die räumlich und/oder organisatorisch mit der Femseh- oder Rundfunkstation verbunden oder von dieser getrennt sein kann. Die Auswerteeinrichtung weist eine Speichereinrichtung auf, in der die Teilnehmerdatenstrukturen gespeichert werden können. Weiterhin kann sie eine geeignete Empfangseinrichtung aufweisen, um Daten und/oder Gespräche von den Mobilfunkendgeräten zu empfangen. Darüber hinaus kann sie zur Speicherung der Antwortdaten eine Speichereinrichtung und zur Auswertung der empfangenen Antworten eine Datenverarbeitungseinrichtung umfassen, die mit der Empfangseinrichtung gekoppelt ist oder diese enthält. Die verschiedenen Komponenten der Auswerteeinrichtung brauchen dabei nicht unbedingt an einem Ort angeordnet zu sein, doch ist dies vorzugsweise der Fall.

Auf der Seite möglicher Teilnehmer werden zum einen Empfangsgeräte für die übertragenen Fernseh- oder Rundfunksendungen, beispielsweise Fernsehgeräte, Radiogeräte oder Computer bzw. Monitore mit entsprechenden TV- oder Radio-Empfangskarten, verwendet. Dabei genügt es, dass Teilnehmer mit den Empfangsgeräten empfangene Sendungen wahrnehmen können.

Zum anderen werden Mobilfunkendgeräte verwendet, bei denen es sich um beliebige Endgeräte in einem wenigstens auf der Strecke zu dem Endgerät drahtlosen Kommunikationsnetz handeln kann. Insbesondere können Mobilfunktelefone, so genannte Personal Digital Assistants (PDAs) mit entsprechenden Mobilfunkschnittstellen oder auch Computer mit entsprechenden Schnittstellen bzw. Modems verwendet werden.

Für die Übertragung von Antworten von den Mobilfunkendgeräten zu der Auswerteeinrichtung kann ein beliebiges geeignetes Kommunikationsnetz verwendet werden, das wenigstens auf der Teilnehmerseite ein Mobilfunknetz umfasst. Auf der Seite der Auswerteeinrichtung kann das Kommunikationsnetz auch ein anderes Netz, beispielsweise das Internet, wenigstens teilweise umfassen. Die Empfangseinrichtung der Auswerteeinrichtung ist dann entsprechend ausgebildet.

Teilnehmer melden sich unter Angabe von Daten zu ihrer Identität zur Teilnahme an der Gewinnveranstaltung an. Die angegebenen Identitätsdaten umfassen dabei wenigstens eine Angabe. Im Rahmen der Erfindung können Identitätsdaten beispielsweise allein aus einer Zeichenkette, zum Beispiel der Telefonnummer bestehen, können aber auch mehrere andere Angaben enthalten. Die Anmeldung kann vor der Abgabe der ersten Antwort erfolgen oder in Verbindung mit der Abgabe der ersten Antwort. Die Identifikationsdaten werden dabei in wenigstens einer Teilnehmerdatenstruktur abgelegt, worunter im Rahmen der Erfindung neben einer Datei, Datenbank oder Datenbanktabelle beispielsweise auch eine Datenstruktur, die gegebenenfalls nur temporär von einem Datenverarbeitungsprogramm erzeugt wird, verstanden wird. Für einen schnellen Zugriff ist die Teilnehmerdatenstruktur vorzugsweise Teil einer Datenbank. Die Teilnehmerdatei kann in einer entsprechenden Speichereinrichtung eines Datenverarbeitungssystems der Auswerteeinrichtung abgelegt sein. Weiterhin kann sie vorzugsweise mit der Empfangseinrichtung der Auswerteeinrichtung gekoppelt sein, so dass eine wenigstens halbautomatische Verknüpfung von Identifikationscodes im Zusammenhang mit einer konkreten Teilnahme und in der Teilnehmerdatenstruktur abgespeicherten Identifikationscodes erfolgen kann.

Einem Teilnehmer bzw. den entsprechenden Identitätsdaten wird jeweils in Verbindung mit der Anmeldung oder zu einem späteren Zeitpunkt, der nicht später als die Absendung bzw. der Empfang der ersten Antwort liegt, jeweils ein Identifikationscode zugewiesen, der dazu verwendet wird, abgegebene Antworten einem Teilnehmer zuordnen zu können und der vorzugsweise wenigstens während der Dauer einer Gewinnveranstaltung bestehen bleibt. Wird eine Angabe aus den Identifikationsdaten als Identifikationscode verwendet, brauchen nur die Identifikationsdaten abgespeichert zu werden, andernfalls können einander zugeordnet die Identitätsdaten und der Identifikationscode abgespeichert werden. Die Speicherung kann dabei in der Teilnehmerdatenstruktur oder einer dieser zugeordneten Datenstruktur oder Datei erfolgen. Die Identifikationsdaten und der Identifikationscode können insbesondere in einer Datenbank gespeichert sein, so dass ein schneller Zugriff ermöglicht wird.

Zur Durchführung der Gewinnveranstaltung wird wenigstens eine Gewinnveranstaltungssendung von der Fernseh- oder Rundfunkstation übertragen und von Teilnehmern unter Verwendung der Empfangsgeräte empfangen.

Die eigentliche Gewinnveranstaltung bzw. der eigentliche Wettbewerb kann sich dabei grundsätzlich auch über mehrere Gewinnveranstaltungssendungen erstrecken, vorzugsweise wird jedoch eine Gewinnveranstaltung in einer Gewinnveranstaltungssendung, die beispielsweise durch Werbepausen unterbrochen sein kann, durchgeführt.

In wenigstens einem Gewinnveranstaltungsabschnitt in der Gewinnveranstaltungssendung wird wenigstens eine zu beantwortende Frage gestellt und übertragen. Die Teilnehmer können nun die von ihrem Empfangsgerät empfangene und ausgegebene Frage beantworten und die Antwort in das Mobilfunkendgerät eingeben, von dem die Antwort mit dem Identifikationscode an die Auswerteeinrichtung, insbesondere deren Empfangseinrichtung, übertragen wird. Die Eingabe der Antwort kann dabei per Sprache oder über die Bedienung von Eingabeeinrichtungen, beispielsweise einer Tastatur eines Mobilfunktelefons oder eines Touchscreen-Displays, erfolgen. Die Auswerteeinrichtung ist dann dazu eingerichtet, die übertragenen Antworten entsprechend zu erkennen. Der Identifikationscode kann von dem Teilnehmer eingeben werden oder automatisch bei der Übertragung der Antwort mit übertragen werden.

Dabei besteht eine kontinuierliche Datenverbindung von dem Mobilfunkendgerät eines, vorzugsweise jedes Teilnehmers, in das Kommunikationsnetz zwischen Anmeldung und letzter Antwort des Teilnehmers während der Gewinnveranstaltungssendung oder erster Antwort und letzter Antwort des Teilnehmers während der Gewinnveranstaltungssendung. Dies kann insbesondere bedeuten, dass der Teilnehmer nach einer ersten Einwahl zu einem Dienst des Kommunikationsnetzes, der eine kontinuierliche Verbindung in das Kommunikationsnetz gestattet, ohne eine weitere Einwahl über einen längeren Zeitraum verteilt Daten in dem Kommunikationsnetz übertragen und vorzugsweise auch empfangen kann. Die erste Einwahl kann dabei beispielsweise allein durch Anmeldung in dem Kommunikationsnetz oder vorzugsweise durch zusätzliche Eingabe einer Kennung für den Dienst erfolgen.

Die empfangenen Antworten werden zusammen mit der Zeit ihrer Abgabe und/oder der Zeit ihres Empfangs und/oder der Reihenfolge ihres Empfangs entsprechend dem Identifikationscode als Antwortdaten gespeichert, was in einer Antwortdatei oder einer anderen Datenstruktur erfolgen kann. Je nach Struktur der Antwortdatei wird dabei für jede empfangene Antwort der Identifikationscode mit abgespeichert oder die Antwort wird in einem dem Identifikationscode entsprechenden Abschnitt der Antwortdatei gespeichert. Es ist jedoch auch eine Speicherung im Zusammenhang mit der Teilnehmerdatenstruktur möglich, die hierfür entsprechende Felder aufweisen kann. Zur Speicherung der Antworten wird vorzugsweise die gleiche Datenverarbeitungseinrichtung der Auswerteeinrichtung verwendet wie zur Speicherung der Teilnehmerdatenstruktur.

Unter der wenigstens näherungsweise erfassten Zeit der Abgabe wird dabei eine Zeit verstanden, die in vorgegebenen Fehlergrenzen, einen Rückschluss auf die Zeit der tatsächlichen Eingabe der Antwort zulässt.

Die Zeit der Abgabe der Antwort und die Zeit des Empfangs der Antwort können dabei absolut oder relativ zu einem vorgegebenen Referenzzeitpunkt angegeben sein.

Unter der Abspeicherung der Antworten mit der Empfangsreihenfolge wird dabei insbesondere auch verstanden, dass die Antworten nur in einer entsprechend verketteten Datenstruktur abgespeichert werden, ohne dass ihnen explizit eine Rangfolge in Form eines Codes oder einer Zahl zugeordnet wird.

Nach einem vorgegebenen Zeitpunkt werden die gespeicherten Antwortdaten entsprechend der Qualität der jeweiligen Antwort für jeden Teilnehmer bzw. Identifikationscode ausgewertet.

Bei dem vorgegebenen Zeitpunkt kann es sich um das Ende eines Gewinnveranstaltungsabschnitts einer Gewinnveranstaltungssendung handeln, bei dem die Gewinnveranstaltung endet. Grundsätzlich ist es jedoch auch möglich, dass ein Zeitpunkt gesetzt wird, der außerhalb einer Gewinnveranstaltungssendung liegt.

Als Qualität der Antwort kann insbesondere verwendet werden, ob eine entsprechende Frage richtig oder falsch beantwortet wurde. Die Frage kann dabei auch aus Teilfragen bestehen. Es ist jedoch auch möglich, Fragen zu verwenden, bei denen die Antworten beispielsweise Schätzungen von Zahlen umfassen. Dann kann beispielsweise der Abstand zu einem vorgegebenen besten Wert zur Beurteilung der Qualität herangezogen werden. Bei diesen Alternativen ist insbesondere eine schnelle einfache maschinelle Auswertung möglich. Grundsätzlich kann es sich bei der Qualität einer Antwort beispielsweise auch um eher subjektiv zu beurteilende Eigenschaften wie zum Beispiel die Originalität der Antwort handeln. Bei Verwendung von mehreren Fragen, können die Antworten, beispielsweise mit einer Punktzahl, bewertet werden, um anhand der Bewertungen, später ein Gesamtergebnis für einen Teilnehmer zu bilden. Beispielsweise kann eine Summe von Punktzahlen oder ein Mittelwert von Punktzahlen gebildet werden.

Die Bewertung kann allein auf der Basis der Qualität der Antworten erfolgen. Um, insbesondere wenn mehrere Fragen gestellt werden, unter in Bezug auf die Qualität gleichwertigen Antworten weiter differenzieren zu können, kann eine Gewichtung der Bewertungen der Antworten relativ zueinander dadurch erfolgen, dass zusätzlich die wenigstens näherungsweise erfasste Zeit der Abgabe oder des Empfangs der Antwort oder die Rangfolge in der Eingangsreihenfolge mit herangezogen wird. So kann beispielsweise die erste richtige Antwort zu einer Frage höher bewertet werden als die zweite. Insbesondere kann die Auswertung so erfolgen, dass nur die erste richtige Antwort in dem jeweiligen Gesamtergebnis berücksichtigt wird.

Die Auswertung der Antworten und die Ermittlung eines Gesamtergebnisses für jeden Teilnehmer bzw. für jeden Identifikationscode können dabei insbesondere in der Datenverarbeitungseinrichtung der Auswerteeinrichtung erfolgen, in der auch die Teilnehmerdatenstruktur und/oder die Antwortdaten gespeichert sind.

Die Aufgabe wird nach einer zweiten Alternative gelöst durch ein Verfahren zur Durchführung einer Gewinnveranstaltung mittels einer Fernsehoder Rundfunkstation mit den Merkmalen des Anspruchs 2.

Bei dem erfindungsgemäßen Verfahren zur Durchführung einer Gewinnveranstaltung mittels einer Fernseh- oder Rundfunkstation und Mobilfunkendgeräten nach der zweiten Alternative melden sich Teilnehmer unter Angabe von Daten zu ihrer Identität zur Teilnahme an der Gewinnveranstaltung an und es wird den Teilnehmern jeweils ein Identifikationscode zugewiesen, wobei die Identitätsdaten und/oder der Identifikationscode in wenigstens einer Teilnehmerdatenstruktur in einer Auswerteeinrichtung abgespeichert werden. Es wird wenigstens eine Gewinnveranstaltungssendung von der Femseh- oder Rundfunkstation übertragen und von den Teilnehmern empfangen. In wenigstens einem Gewinnveranstaltungsabschnitt in der Gewinnveranstaltungssendung wird wenigstens eine zu beantwortende Frage gestellt und es wird von der Auswerteeinrichtung über Mobilfunkendgeräte von angemeldeten Teilnehmern eine Antwort abgefragt. Die Teilnehmer geben jeweils eine Antwort auf die Frage in ihr Mobilfunkendgerät ein. Die Antworten werden mit dem jeweiligen Identifikationscode an die Auswerteeinrichtung übertragen. Die empfangenen Antworten werden zusammen mit der wenigstens näherungsweise erfassten Zeit ihrer Abgabe und/oder der Zeit ihres Empfangs und/oder der Reihenfolge ihres Empfangs entsprechend dem Identifikationscode als Antwortdaten in der Auswerteeinrichtung gespeichert. Nach einer vorgegebenen Zeit werden die gespeicherten Antwortdaten entsprechend der Qualität der jeweiligen Antwort und gegebenenfalls der jeweiligen Zeit der Abgabe und/oder der Zeit ihres Empfangs und/oder der Reihenfolge ihres Empfangs zur Ermittlung wenigstens eines Gewinners ausgewertet.

Das Verfahren nach der zweiten Alternative unterscheidet sich von dem Verfahren nach der ersten Alternative zum einen dadurch, dass bei dem ersten Verfahren die Verbindung in das Kommunikationsnetz kontinuierlich zwischen der Anmeldung oder ersten Antwort und der letzten Antwort eines Teilnehmers während einer Gewinnveranstaltungssendung besteht. Bei dem Verfahren nach der zweiten Alternative braucht dies nicht der Fall zu sein, doch ist es auch bei diesem bevorzugt, dass jeweils zwischen Anmeldung und letzter Antwort eines Teilnehmers während der Gewinnveranstaltungssendung oder erster Antwort und letzter Antwort eines Teilnehmers während der Gewinnveranstaltungssendung kontinuierlich eine Datenverbindung von dessen Mobilfunkendgerät in das Kommunikationsnetz besteht, mit dem die Auswerteeinrichtung verbunden ist.

Zum anderen wird bei dem Verfahren nach der zweiten Alternative von der Auswerteeinrichtung über Mobilfunkendgeräte von angemeldeten Teilnehmern eine Antwort abgefragt. Dazu können die von den Teilnehmern bei der Anmeldung übermittelten Identifikationsdaten oder der den Teilnehmern zugewiesene Identifikationscode verwendet werden. Dabei kann zur Abfrage eine Verbindung zu jedem Mobilfunktelefon einzeln aufgebaut werden. Vorzugsweise erfolgt jedoch eine Abfrage bei kontinuierlich bestehender Verbindung der Mobilfunkendgeräte in das Kommunikationsnetz.

Die Abfrage kann dabei insbesondere darin bestehen, dass Antwortalternativen auf einer Anzeigeeinrichtung des Mobilfunkendgeräts angezeigt werden, von denen der Teilnehmer dann eine durch Betätigen einer entsprechenden Taste auswählt. Es kann jedoch auch ein Prompt bzw. Anforderungs- bzw. Eingabezeichen oder -feld über das Mobilfunkendgerät ausgegeben werden, auf den bzw. das hin die Antwort einzugeben ist.

Das Merkmal der Abfrage der Antworten kann vorzugsweise auch bei dem Verfahren nach der ersten Alternative vorgesehen sein.

Alle anderen Ausführungen zu dem erfindungsgemäßen Verfahren nach der ersten Alternative gelten entsprechend auch für das erfindungsgemäße Verfahren nach der zweiten Alternative.

Die erfindungsgemäßen Verfahren nach der ersten und der zweiten Alternative erlauben eine einfache Durchführung einer Gewinnveranstaltung über eine Fernseh- oder Rundfunkstation, wobei gleichzeitig eine große Anzahl von Teilnehmern teilnehmen kann, die im Wesentlichen den gleichen Teilnahmebedingungen unterworfen sind.

Weiterhin erfordert die Teilnahme auf der Seite der Teilnehmer nur Geräte, über die sehr viele potentielle Teilnehmer ohnehin verfügen.

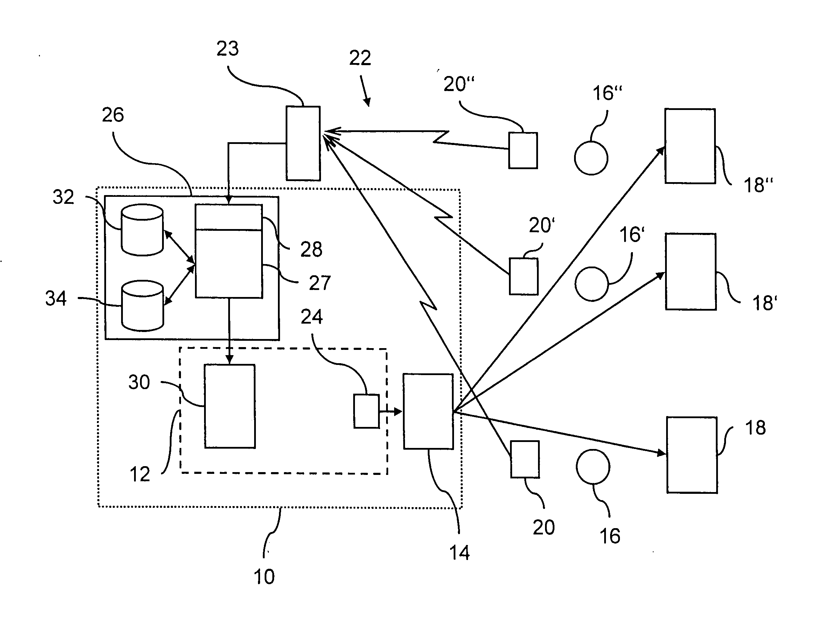

Weiterbildungen und bevorzugte Ausführungsformen der Erfindung sind in den Ansprüchen, der Beschreibung und der Zeichnung beschrieben.

Als Identitätsdaten können grundsätzlich individuelle Daten eines Teilnehmers dienen, die es erlauben, ihn von anderen Teilnehmern zu unterscheiden und ihm gegebenenfalls einen Gewinn übermitteln zu können. Beispielsweise können persönliche Daten wie Name und Anschrift oder auch ein selbst gewählter Spitzname als Identitätsdaten verwendet werden. Insbesondere in diesem Fall ist es bevorzugt, dass wenigstens einer der Teilnehmer sich vor Beginn der Gewinnveranstaltungssendung anmeldet und Identifikationsdaten explizit eingibt. Es wird so eine Verzögerung bei der Gewinnveranstaltung selbst vermieden und es können weitere Daten über den Teilnehmer erfasst werden, die beispielsweise für die Gewinnveranstaltung oder zu statistischen Zwecken verwendet werden können. Weiterhin kann dessen Adresse leicht erfasst werden, was beispielsweise die Zustellung eines Sachpreises als Gewinn erheblich erleichtern kann.

Um eine möglichst spontane Teilnahme an der Gewinnveranstaltung zu ermöglichen, ist es bevorzugt, dass die Anmeldung in Verbindung mit der Abgabe der ersten Antwort erfolgt.

Insbesondere für eine wenigstens halbautomatische Anmeldung und/oder einer Anmeldung in Verbindung mit der Abgabe der ersten Antwort ist es bevorzugt, dass die Identitätsdaten die Telefonnummer des Mobilfunkendgeräts oder eine der Telefonnummer eindeutig zugeordnete, vorzugsweise von dem Mobilfunknetzbetreiber vergebene, Kennung umfassen. Vorzugsweise wird nur die Telefonnummer oder die der Telefonnummer eindeutig zugeordnete Kennung als Identitätsdatum verwendet. Neben der einfachen Speicherbarkeit der Daten ist so auch sichergestellt, dass nicht zufällig Identitätsdaten doppelt auftreten können, da Telefonnummern oder diesen zugeordnete Kennungen nur einmal vergeben werden. Die persönliche Identifikation des Teilnehmers kann dann durch Rückruf erfolgen oder unter Mithilfe des entsprechenden Mobilfunknetzbetreibers, bei dem der Teilnehmer angemeldet ist. Neben Telefonnummern, die bei einer Herstellung einer Verbindung in der Regel mit übertragen werden, können auch statische Kennungen oder dynamische Kennungen, die gegebenenfalls nur für die Dauer der Verbindung in das Kommunikationsnetz bestehen und insbesondere ohne explizite Eingabe in das Mobilfunkendgerät bei Übertragungen von einem Empfänger erfassbar sind, beispielsweise IP-Adressen oder andere Kennungen bei zur Übertragung verwendeten Diensten wie WAP-Diensten, verwendet werden.

Der Identifikationscode dient dazu, eine empfangene Antwort einem Teilnehmer zuzuordnen, so dass dessen Antworten gesammelt werden können. Als Identifikationscode kann daher jede beliebige Kennung verwendet werden, die eine solche Zuordnung erlaubt. Um eine explizite Eingabe des Identifikationscodes vermeiden zu können, ist es bevorzugt, dass als Identifikationscode die Telefonnummer des Mobilfunkendgeräts bzw. eine dieser zugeordnete Kennung verwendet wird. Die Telefonnummer des Teilnehmers bzw. die dieser zugeordnete, vorzugsweise von dem Mobilfunknetzbetreiber vergebene Kennung kann insbesondere bei einer bestehenden Verbindung automatisch über das Kommunikationsnetz zwischen dem Mobilfunkendgerät und der Auswerteeinrichtung übertragen und von der Auswerteeinrichtung automatisch ausgelesen werden, was die Verarbeitung der Antworten erheblich vereinfacht. Die der Telefonnummer zugeordnete Kennung braucht dieser nicht unbedingt permanent zugeordnet zu sein, vielmehr genügt es, dass diese der Telefonnummer nur während der Dauer der Gewinnveranstaltung zugeordnet ist. Erfolgt die Übertragung beispielsweise unter Verwendung eines GPRS- oder UMTS-Netzes mit Datenpaketvermittlung kann eine Absenderadresse des Pakets oder eine dem Mobilfunkendgerät zugeordnete IP-Adresse als Identifikationscode verwendet werden, soweit diese für die Dauer der Gewinnveranstaltung gleich bleibt oder sich nachvollziehbar ändert.

Die Anmeldung kann dabei bei einem Drittanbieter, der die Gewinnveranstaltung veranstaltet, insbesondere der Fernseh- oder Radiostation, oder auch bei dem Mobilfunknetzbetreiber erfolgen.

Je nach Art der Gewinnveranstaltung kann die Anmeldung kostenlos oder kostenpflichtig sein. In letzterem Fall ist es bevorzugt, dass eine Teilnahmegebühr über das Telekommunikationskonto des Teilnehmers bei seinem Mobilfunknetzbetreiber bzw. die Rechnung des Mobilfunknetzbetreibers an den Teilnehmer abgerechnet wird. Hierdurch wird der technische Aufwand zur Abrechnung der Teilnahmegebühr möglichst gering gehalten.

Weiterhin kann eine Gebühr auch bei jeder Abgabe einer Antwort erhoben werden, was ebenfalls vorzugsweise über das Telekommunikationskonto des Teilnehmers bei seinem Mobilfunknetzbetreiber bzw. die Rechnung des Mobilfunknetzbetreibers an den Teilnehmer erfolgt.

Grundsätzlich können die Antworten in beliebiger, durch ein Mobilfunkendgerät übertragbaren Art und Weise übertragen werden. Beispielsweise ist eine Übertragung mit Sprache möglich, wozu die Auswerteeinrichtung vorzugsweise eine Spracherkennung zur automatischen Erkennung der Antworten aufweist. Es ist jedoch bevorzugt, dass die Antworten in Form von Daten an die Auswerteeinrichtung übertragen werden. Dabei werden unter Daten ausdrücklich nicht nur einfach analog-digital gewandelte Sprach- bzw. Audiosignale verstanden. Trotzdem kann dabei die Eingabe in das Mobilfunkendgerät grundsätzlich auch per Sprache erfolgen, soweit das Mobilfunkendgerät über eine Spracherkennung verfügt, die erfasste Sprache erkennt und in Antwortdaten umsetzt. Die Datenübertragung kann über eine Datenverbindung leitungsvermittelt, verbindungsorientiert paketvermittelt oder auch verbindungslos als Paketdatenübertragung erfolgen.

Bei dem Verfahren kann ein beliebiges Kommunikationsnetz, das teilnehmerseitig ein Mobilfunknetz umfasst, verwendet werden. Insbesondere kann dabei ein Mobilfunknetz nach dem GSM-Standard oder anderen digitalen Standards verwendet werden. Um jedoch die Kosten der Teilnahme möglichst gering zu halten, ist es bevorzugt, dass zur Übermittlung der Antworten von wenigstens einem Mobilfunkendgerät zu der Auswerteeinrichtung in dem Kommunikationsnetz eine paketvermittelte Datenübertragung verwendet wird, bei der Übertragungsgebühren im Wesentlichen in Abhängigkeit von der übertragenen Datenmenge erhoben werden. Darunter, dass Übertragungsgebühren im Wesentlichen in Abhängigkeit von der übertragenen Datenmenge erhoben werden, wird auch verstanden, dass gegebenenfalls zusätzlich zu der von der übertragenen Datenmenge abhängigen Übertragungsgebühr auch eine feste, zeitunabhängige Gebühr, beispielsweise für Herstellung der kontinuierlichen Verbindung von einem Mobilfunkendgerät in das Kommunikationsnetz erhoben werden kann.

Besonders bevorzugt können GPRS-, EGDE-, HSCSD- oder UMTS-Netze oder ein Netz nach einer Weiterentwicklung des UMTS-Netzes als Kommunikationsnetze verwendet werden. Das Mobilfunkendgerät muss dann entsprechend ausgebildet sein. In solchen Netzen, insbesondere GPRSoder UMTS-Netzen, können Datenverbindungen aufgebaut werden, die einen so genannten "always-on"-Betrieb erlauben, bei dem Datenpakete ohne einen Verbindungsaufbau für jede Einzelübertragung versendet werden können. Die Teilnahme an der Gewinnveranstaltung ist dann auch besonders kostengünstig, da bei der paketvermittelten Datenverbindung Gebühren nach Datendurchsatz entstehen und nicht nach Dauer der Verbindung. Die Auswerteeinrichtung kann dann zum Empfang der Antworten beispielsweise ebenfalls über eine GPRS- oder UMTS-Schnittstelle verfügen oder einen Internet-Rechner aufweisen.

Um die Gewinnveranstaltung für die Teilnehmer bzw. Zuschauer oder Zuhörer interessanter gestalten zu können, ist es bevorzugt, dass noch bevor eine weitere Frage gestellt wird, die Antwort zu der aktuellen Frage übertragen wird. Insbesondere in diesem Fall ist es bevorzugt, dass nur Antworten berücksichtigt werden, die innerhalb einer vorgegebenen Zeitspanne nach der Übertragung der Frage in das Mobilfunkendgerät eingegeben werden oder bei einer Einrichtung eines zur Übertragung verwendeten Kommunikationsnetzes eingehen oder bei der Auswerteeinrichtung empfangen werden.

Wird zur Teilnahme an der Gewinnveranstaltung ein Mobilfunkendgerät verwendet, das die Darstellung von Menüs und die Abfrage von Daten, beispielsweise über WAP (Wireless Application Protocol) erlaubt, ist es bevorzugt, dass ein Eingabefeld zur Eingabe einer Antwort auf dem Mobilfunkendgerät nur für eine vorgegebene Zeitspanne aktiviert wird. Bei Verwendung von WAP kann der Teilnehmer dazu zunächst eine entsprechende Seite der dann vorzugsweise mit der Fernseh- oder Rundfunkstation gekoppelten Auswerteeinrichtung anwählen, von der aus die Seite bzw. Maske auf der Anzeige des Mobilfunkgeräts gegebenenfalls unter Verwendung von Skripten aufgebaut wird.

Zusätzlich oder alternativ ist es bevorzugt, dass die Antworten bei deren Übertragung einen Zeitstempel erhalten, der der jeweiligen Antwort von einer Einrichtung eines Kommunikationsnetzes, über das Antworten an die Auswerteeinrichtung übermittelt werden, insbesondere einer Basisstation oder einer Mobilvermittlungsstelle eines Mobilfunknetzes, bei Eintreffen der Antwort an der Einrichtung hinzugefügt wird. Bei dem Zeitstempel kann es sich um eine beliebig codierte Angabe einer absolut oder relativ zu einem vorgegebenen Zeitpunkt bestimmten Zeitangabe handeln, die in der Auswerteeinrichtung auswertbar ist. Der Zeitstempel wird dann zusammen mit der Antwort an die Auswerteeinrichtung übertragen, so dass dort eine besonders präzise, nicht durch Teilnehmer manipulierbare Information über die Zeit der Abgabe der Antwort vorliegt.

Bei Verwendung von WAP ist es bevorzugt, dass die Abfrage der Antworten über WAP erfolgt, und dass ein entsprechendes WAP-Portal bei Eintreffen einer Antwort einen Zeitstempel vergibt und zusammen mit der Antwort an die Auswerteeinrichtung übermittelt. Auch auf diese Weise wird eine besonders einfache, aber genaue Festlegung der Antwortzeit ermöglicht.

Alternativ oder zusätzlich ist es bevorzugt, dass zu wenigstens einem Zeitpunkt vor oder während der ersten zu beantwortenden Frage der Gewinnveranstaltung und nach Eingabe jeweils einer Antwort aktuelle Zeitdaten des Mobilfunkendgeräts an die Auswerteeinrichtung übertragen werden. Eine Manipulation der Zeiteinstellung des Mobilfunkendgeräts in der Zwischenzeit erscheint bei kurzen zeitlichen Abständen zwischen aufeinander folgenden Fragen nur schwer möglich. Erfolgt die Übertragung der Zeitinformation über ein Skript, beispielsweise ein WML-Skript (Wireless Markup Language-Skript), kann durch entsprechende Gestaltung des WML-Skripts eine Manipulation der Uhr des Mobilfunkendgeräts ausgeschlossen bzw. erkannt werden.

Um die Gewinnveranstaltung für Zuschauer und insbesondere Teilnehmer interessanter zu gestalten, ist es bevorzugt, dass während der Gewinnveranstaltungssendung und nachdem eine Frage gestellt wurde, die bisher zu der Frage gespeicherten Antwortdaten wiederholt ausgewertet werden, und die Anzahl der Teilnehmer angezeigt oder übertragen wird, die zu dem Zeitpunkt an der Gewinnveranstaltung teilnehmen. Die Auswertung erfolgt dabei in der Auswerteeinrichtung. Die Auswertung und Anzeige bzw. Übertragung kann zweckmäßig in beliebigen, vorgegebenen Zeitabständen erfolgen, die kleiner sind als die Zeitspanne, in der die Frage beantwortet werden muss, beispielsweise im Sekunden oder Minutentakt. Hierzu ist bei einer Fernsehsendung vorzugsweise die Ausgabe einer Anzeigeeinrichtung der Auswerteeinrichtung von einer Fernsehkamera der Fernsehstation erfassbar oder es sind entsprechende Ausgaben in das Fernsehbild einblendbar, wozu die Auswerteeinrichtung bzw. eine Ausgabeschnittstelle der Auswerteeinrichtung dann mit der Fernsehstation gekoppelt ist.

Weiterhin ist es insbesondere bei Fragen, bei denen eine Schätzung oder Vermutung anzustellen ist, bevorzugt, dass während der Gewinnveranstaltungssendung und nachdem eine Frage gestellt wurde, die bisher zu der Frage gespeicherten Antwortdaten wiederholt ausgewertet werden und die Anzahl der Teilnehmer angezeigt oder übertragen wird, die die Frage bis dahin richtig oder falsch beantwortet haben. Teilnehmer, die bis zu dem Zeitpunkt der Anzeige bzw. Übertragung noch nicht geantwortet haben, müssen sich dann entscheiden, ob sie sich eher der bisher bestehenden Mehrheit anschließen oder ihre eigene Meinung vertreten wollen. Bei der Bewertung von Antworten ist es dann bevorzugt, dass Antworten auf eine Frage, die erst nach Abgabe und Empfang einer großen Zahl von Antworten anderer Teilnehmer auf die Frage abgegeben oder empfangen werden, weniger hoch bewertet werden als Antworten anderer Teilnehmer gleichen Inhalts, die nach einer geringeren Anzahl bereits eingegangener Antworten zu derselben Frage abgegeben oder empfangen wurden. Die Auswertung und Anzeige kann ansonsten beispielsweise wie zuvor beschrieben erfolgen.

Um außergewöhnliche Antworten möglichst angemessen bewerten zu können, ist es bevorzugt, dass bei der Auswertung der Antwortdaten zunächst eine Statistik erstellt wird, wieviele Teilnehmer eine Frage unzutreffend und/oder wieviele Teilnehmer die Frage zutreffend beantwortet haben, und dass eine Bewertung einer zutreffenden oder unzutreffenden Antwort in Abhängigkeit von der Statistik erfolgt.

Eine weitere Möglichkeit, die Gewinnveranstaltung für Zuschauer oder -hörer und insbesondere Teilnehmer interessanter zu gestalten, besteht darin, dass bei der Auswertung der Antwortdaten Teams von Teilnehmern gebildet werden, indem die Antworten von Teilnehmern gemeinsam ausgewertet werden, die wenigstens ein das jeweilige Team definierendes Kriterium erfüllen. Beispielsweise können Teams dadurch gebildet werden, dass Teilnehmer in Abhängigkeit von bestimmten persönlichen Daten, die beispielsweise bei der Anmeldung erfasst wurden, einander zugeordnet werden. Je nach erfassten Daten können die Kriterien beispielsweise den Wohnort, das Geschlecht oder das Lebensalter der Teilnehmer betreffen. Zur Teambildung wird dann die Teilnehmerdatenstruktur herangezogen, deren Inhalt zur Festlegung der Gruppen ausgewertet wird. Vorzugsweise wird hierzu eine Datenverarbeitungseinrichtung der Auswerteeinrichtung verwendet.

Weiterhin ist es bevorzugt, dass bei der Übermittlung der Antworten die Kennung der Mobilfunkzelle erfasst wird, in der sich das Mobilfunkendgerät befindet, und dass bei der Auswertung der Antwortdaten Teams von Teilnehmern gebildet werden, indem die Antworten von Teilnehmern gemeinsam ausgewertet werden, deren Mobilfunkzellenkennungen wenigstens ein das Team definierendes Kriterium erfüllen. Auf diese Weise können einfach lokale Teams gebildet werden, deren Mitglieder gegebenenfalls nur temporär einander zugeordnet sind.

Die Gewinne können grundsätzlich beliebig sein und auf beliebige Art und Weise verteilt werden. Ein Gewinn braucht beispielsweise nur in der Bekanntgabe des Namens oder eines Bildes des Gewinners zu bestehen. Es können jedoch auch Sachpreise vergeben werden. Es ist jedoch bevorzugt, dass bei einem Gewinn eines Teilnehmers dem Teilnehmer elektronisch ein Guthaben auf einem Konto gutgeschrieben wird. Die Gutschrift kann insbesondere unter Verwendung der Auswerteeinrichtung und vorzugsweise unmittelbar nach Ermittlung des Gewinners auf ein beliebiges Konto erfolgen. Das Guthaben kann dabei beispielsweise auf ein Bankkonto des Teilnehmers, beispielsweise bei einer Bank, oder in Form eines Wertpapiers einem im Sinne der Erfindung auch als Konto angesehenes Wertpapierdepot des Teilnehmers gutgeschrieben werden.

Es ist jedoch besonders bevorzugt, dass das Guthaben dem Telekommunikationskonto des Teilnehmers gut geschrieben wird. Die Gutschrift kann durch Angabe der Telefonnummer oder einer von dem Mobilfunknetzbetreiber vergebenen, der Telefonnummer entsprechenden Kennung, die bei der Anmeldung oder der Übertragung der Antwort automatisch als Verbindungsdatum mit übertragen wird, erfolgen. Hierdurch ist eine einfache Überweisung möglich, ohne dass an sich sensitive persönliche Daten des Teilnehmers wie die Nummer eines Bankkontos bei der Anmeldung übertragen zu werden brauchen. Die Teilnahme kann insbesondere vollkommen anonym gehalten werden.

Weiterhin können für die Teilnahme an der Gewinnveranstaltung als solchem und/oder für die Beantwortung einer Frage Gewinnveranstaltungsgebühren erhoben werden. Vorzugsweise wird einem Teilnehmer dann ein Teilnehmerkonto zugeordnet, das zur Teilnahme ein Guthaben aufweisen muss, das beispielsweise durch eine Überweisung von einem Bankkonto aufgebaut werden kann. Es ist dann bevorzugt, dass für die Teilnahme an der Gewinnveranstaltung eine Teilnahmegebühr oder für die Beantwortung jeweils einer Frage eine Antwortgebühr von einem Teilnehmerkonto abgebucht wird, und dass bei einem Gewinn ein entsprechendes Guthaben auf dem Teilnehmerkonto gutgeschrieben wird. Eine solche, vorzugsweise mittels der Auswerteeinrichtung ausgeführte Gutschrift ist nicht nur sehr einfach zu tätigen, da der Veranstalter über die notwendigen Daten ohnehin verfügt. Sie animiert den Gewinner auch, an der nächsten Gewinnveranstaltung teilzunehmen.

Um einen weiteren Anreiz zu schaffen, an der Gewinnveranstaltung teilzunehmen, ist es bevorzugt, dass der Gewinner über das Mobilfunkendgerät wenigstens ein Bild von sich an die Fernsehstation übermittelt, und dass die Fernsehstation das Bild überträgt. Das Bild kann beispielsweise mit einem MMS-Dienst übertragen werden. Besonders bevorzugt wird eine Videosequenz des Gewinners übertragen, die dieser mittels seines Mobilfunkendgeräts an die Fernseh- oder Rundfunkstation übermittelt

Die Erfindung wird im Folgenden beispielhaft anhand der einzigen Zeichnung weiter erläutert.

Die einzige Figur zeigt eine schematische Darstellung eines Systems zur Durchführung eines Verfahrens zur Durchführung einer Gewinnveranstaltung nach einer ersten bevorzugten Ausführungsform der Erfindung.

Eine Fernsehstation 10 verfügt über ein Fernsehstudio 12 und einen damit verbundenen Sender 14. Zuschauer bzw. Teilnehmer 16, 16', 16" besitzen jeweils Fernsehempfangseinrichtungen 18, 18', 18" für von dem Sender 14 ausgestrahlte Sendungen, die an eine Antenne oder Kabel angeschlossene Fernsehempfänger umfassen, sowie Mobilfunkendgeräte 20, 20', 20" in Form von GPRS- oder UMTS-Mobilfunktelefonen. Weiterhin ist ein Mobilfunknetz 22 nach dem GPRS- oder UMTS-Standard vorgesehen, dessen Mobilfunknetzeinrichtungen 23 in der Figur nur durch ein Kästchen symbolisiert sind.

Das Fernsehstudio 12 der Fernsehstation 10 verfügt unter anderem über eine Video- und Audioerfassungseinrichtung in Form einer Fernsehkamera 24 mit Audioaufnahmeeinrichtungen, beispielsweise Mikrofonen, und eine in der Figur nicht gezeigte Einrichtung zur Verarbeitung der Signale der Fernsehkamera, die verarbeitete Signale an den Sender 14 zur Abstrahlung von entsprechenden Funkwellen abgibt.

In der Fernsehstation 10 ist weiterhin eine Auswerteeinrichtung 26 eingerichtet, die über eine von der Fernsehkamera 24 nicht sichtbare Datenverarbeitungseinrichtung 27 mit einer Schnittstelle 28 in das GPRS- oder UMTS-Netz als Empfangseinrichtung sowie einer mit der Fernsehkamera 24 erfassbaren Anzeigeeinrichtung 30 verfügt. Die Schnittstelle 28 kann beispielsweise als GPRS- oder UMTS-Schnittstelle oder Schnittstelle in das Internet ausgebildet sein, soweit eine Übermittlung der Antworten über das GPRS- oder UMTS-Netz in das Internet gegeben ist.

Die Datenverarbeitungseinrichtung 27 ist zur Durchführung entsprechender Teile eines Verfahrens zur Durchführung einer Gewinnveranstaltung nach einer ersten bevorzugten Ausführungsform der Erfindung programmiert und verfügt dazu, in der Figur nicht gezeigt, über einen Prozessor, und, damit verbunden, einen nichtflüchtigen Speicher zur Speicherung eines auf dem Prozessor ablaufenden Programms, einen flüchtigen Speicher zur Speicherung von Teilen des Programms und Daten während der Ausführung des Programms, sowie Schnittstellen zur Einund Ausgabe und zu der Anzeigeeinrichtung 30. Weiterhin weist die Datenverarbeitungsvorrichtung 27 ein Datenbanksystem mit einer Teilnehmerdatei bzw. -tabelle 32 als Teilnehmerdatenstruktur und einer Antwortdatei bzw. -tabelle 34 auf.

Die Gewinnveranstaltung läuft folgendermaßen ab:

Zu Beginn einer Gewinnveranstaltungssendung, die von der Fernsehstation 10 aus dem Fernsehstudio 12 über den Sender 14 ausgestrahlt und von den Teilnehmern 16, 16' und 16" mit ihren Fernsehempfangseinrichtungen 18, 18' und 18" empfangen wird, werden die Zuschauer aufgefordert, sich zur Teilnahme an der Gewinnveranstaltung anzumelden.

Die Teilnehmer 16, 16' und 16" stellen nun über ihre Mobilfunkendgeräte 20, 20' und 20" eine Datenverbindung in dem GPRS- bzw. UMTS-Netz zu der Auswerteeinrichtung 26 bzw. der Schnittstelle 28 her. Die Datenverbindung hat einen "always-on"-Status und erlaubt eine paketvermittelte Übertragung von Daten an die Auswerteeinrichtung 26, wobei nur eine den übertragenen Datenmengen entsprechende Übertragungsgebühr zur Abrechnung der Telekommunikationskosten des Teilnehmers bzw. des Mobilfunkendgeräts herangezogen wird.

Die Teilnehmer 16, 16' und 16" übertragen nun Identifikationsdaten, im Beispiel ihren Namen, ihre Anschrift sowie die Telefonnummer ihres Mobilfunkendgeräts, an die Auswerteeinrichtung 26 bzw. die Datenverarbeitungseinrichtung 27. Dort wird für jeden Teilnehmer ein entsprechender Teilnehmerdatensatz in der Teilnehmerdatenstruktur bzw. -datei 32 angelegt, der weiterhin einen von der Datenverarbeitungseinrichtung 27 jeweils erzeugten und zugewiesenen eindeutigen Identifikationscode, beispielsweise in Form einer achtstelligen Zahl, enthält, der dem nun zum Teilnehmer gewordenen Teilnehmer bzw. dessen Mobilfunkendgerät eineindeutig zugeordnet ist.

Der Identifikationscode wird an den jeweiligen Teilnehmer übertragen.

Nach der Anmeldung wird ein Gewinnveranstaltungsabschnitt der Gewinnveranstaltungssendung ausgestrahlt, in dem Fragen gestellt werden, die jeweils innerhalb eines vorgegebenen Zeitraums, im Beispiel vier Minuten, beantwortet werden müssen.

Die Teilnehmer 16, 16' und 16" geben nun die Antworten so schnell wie möglich über die Tastatur ihres Mobilfunkendgeräts 20, 20' und 20" ein und übertragen diese zusammen mit dem entsprechenden, zuvor jeweils in dem Mobilfunkendgerät gespeicherten Identifikationscode über das GPRS- bzw. UMTS-Netz an die Auswerteeinrichtung 26.

Dort werden die Antworten mit den Identifikationscodes über die Schnittstelle 28 empfangen und entsprechend den Identifikationscodes in der Antwortdatei 34 mit der Zeit ihres Eingangs in der Schnittstelle 28 abgespeichert.

Nach dem Stellen der Frage wird in der Auswerteeinrichtung 26 mittels der Datenverarbeitungseinrichtung 27 alle 5 Sekunden die Antwortdatei 34 ausgewertet und es wird bestimmt, wieviele Teilnehmer die Frage bereits beantwortet haben und wieviele der Antworten richtig waren. Die Ergebnisse werden auf der Anzeigeeinrichtung 30 angezeigt, von der Fernsehkamera 24 aufgenommen und über den Sender 14 an die Teilnehmer ausgestrahlt.

Antworten, die nach einer längeren Zeit als vier Minuten seit dem Stellen der Frage eingehen, werden nicht mehr berücksichtigt. Nach diesen vier Minuten kann nun die richtige Antwort auf die Frage in dem Fernsehstudio 12 bekannt gegeben, von der Fernsehkamera 24 erfasst und über den Sender 14 an die Teilnehmer 16, 16', 16" bzw. deren Fernsehempfangseinrichtungen 18, 18', 18" übertragen werden.

Nachdem alle Fragen der Gewinnveranstaltung gestellt worden sind und die entsprechenden Zeitdauern zur Beantwortung der Fragen abgelaufen sind, werden die Daten in der Antwortdatei getrennt für jeden der Identifikationscodes ausgewertet.

Dazu werden zunächst für alle Fragen jeweils einzeln alle empfangenen Antworten unabhängig von dem Identifikationscode nach zunehmenden Empfangszeiten nach Stellen der jeweiligen Frage geordnet. Bezeichnet die natürliche Zahl n den Platz in der Rangfolge, so wird jeder Antwort ein entsprechender Bewertungsfaktor, beispielsweise 1+ 1/n, zugeordnet.

Für jeden Identifikationscode wird jede gespeicherte Antwort mit der richtigen Antwort verglichen und es wird eine dem jeweiligen Identifikationscode zugeordnete Ergebnissumme über die Bewertungsfaktoren aller richtigen Antworten gebildet.

In einem folgenden Schritt werden die Ergebnissummen mit den zugeordneten Identifikationscodes in einer Reihe fallender Ergebnissummen geordnet, so dass der erste Eintrag dem Gewinner der Gewinnveranstaltung entspricht.

Unter Verwendung des Identifikationscodes als Schlüssel können nun aus der Teilnehmerdatenstruktur bzw. -datei 32 die Identifikationsdaten des Gewinners ermittelt werden.

Dieser kann nun beispielsweise angeschrieben oder vorzugsweise über sein Mobilfunkendgerät 20 kontaktiert werden. Falls er über ein entsprechendes Gerät verfügt, kann er ein Standbild oder auch eine Videosequenz von sich an die Fernsehstation 10 übertragen, die diese dann aussendet.

Zusätzlich oder alternativ kann eine Auswertung nach Städten, definiert durch deren Postleitzahl, erfolgen. Dazu werden in der Teilnehmerdatenstruktur bzw. -datei 32 durch entsprechende Filterung Gruppen von Teilnehmern der gleichen Stadt ermittelt und die entsprechenden Identifikationscodes in Gruppen gespeichert.

Für jede Gruppe wird nun der arithmetische Mittelwert der Ergebnissummen gebildet. Die Gruppe mit dem höchsten Mittelwert wird als Gewinner der Städteauswertung bekannt gegeben.

Bei einem Verfahren zur Durchführung einer Gewinnveranstaltung nach einer zweiten bevorzugten Ausführungsform der Erfindung erfolgt die Anmeldung erst mit der Abgabe der ersten Antwort, wobei als Identifikationsdaten und Identifikationscode die Telefonnummer des Teilnehmers verwendet wird. Weiterhin werden die Antworten von den Teilnehmern bzw. genauer deren Mobilfunkendgeräten von der Auswerteeinrichtung 26 abgefragt.

Bei diesem Ausführungsbeispiel wird weiterhin ein WAP-Dienst zur Kommunikation zwischen den Mobilfunkendgeräten 20, 20' und 20" und der Auswerteeinrichtung 26 verwendet, die daher auch WAP-tauglich sein müssen. Es wird davon ausgegangen, dass das Mobilfunknetz ebenfalls WAP-tauglich ist.

Ein System zur Durchführung des zweiten Verfahrens unterscheidet sich von dem ersten System weiterhin nur darin, dass statt des GPRS- oder UMTS-Netzes auch ein GSM-Netz verwendet werden kann, und dass die Auswerteeinrichtung 26 und darin speziell die Datenverarbeitungseinrichtung 27 zur Durchführung entsprechender Schritte des zweiten Verfahrens ausgebildet bzw. programmiert ist. Weiterhin sind die Teilnehmerdatenstruktur bzw. -datei 32 und die Antwortdatei 34 zu einer Teilnehmerdatenstruktur in Form einer Teilnehmer-Antwort-Datei bzw. -Tabelle zusammengefasst.

Bei der Gewinnveranstaltung wird im Unterschied zu dem ersten Ausführungsbeispiel bei oder nach dem Stellen jeder Frage eine vorgegebene Eingabe in die Datenverarbeitungseinrichtung 27 vorgenommen, die daraufhin über die Verbindung zu den Mobilfunkendgeräten 20, 20' und 20" von diesen eine Antwort abfragt, indem auf diesen eine Eingabeaufforderung für die Antwort dargestellt wird, auf die hin von dem jeweiligen Teilnehmer die Antwort eingegeben werden muss. Die Antwort wird wie bei dem ersten Ausführungsbeispiel an die Auswerteeinrichtung 26 übertragen und dort ausgewertet.

Der Gewinner als Person kann hier beispielsweise auch dadurch ermittelt werden, dass ein Anruf an die durch den Identifikationscode des Teilnehmers gegebene Telefonnummer erfolgt. Der Gewinner wird sich dann persönlich melden, was bei Übertragung des Telefongesprächs in der Gewinnveranstaltungssendung die Spannung bei der Bekanntgabe des Gewinners erhöht.

Als Gewinn kann weiterhin auf dem Telekommunikationskonto des Gewinners bei dessen Mobilfunknetzbetreiber bzw. -anbieter, das aufgrund des Identifikationscodes und der entsprechenden Telefonnummer bekannt ist, ein vorgegebenes Guthaben gutgeschrieben werden.

### Bezugszeichenliste

- 10: Fernsehstation
- 12: Fernsehstudio
- 14: Sender
- 16, 16', 16": Teilnehmer
- 18, 18', 18": Fernsehempfangseinrichtungen
- 20, 20', 20": Mobilfunkendgeräte
- 22: Mobilfunknetz
- 23: Mobilfunknetzeinrichtungen
- 24: Fernsehkamera
- 26: Auswerteeinrichtung
- 27: Datenverarbeitungseinrichtung
- 28: Schnittstelle
- 30: Anzeigeeinrichtung
- 32: Teilnehmerdatei
- 34: Antwortdatei

## Patentansprüche

1. Verfahren zur Durchführung einer Gewinnveranstaltung mittels einer Fernseh- oder Rundfunkstation (10) und Mobilfunkendgeräten (20, 20', 20"),
bei dem sich Teilnehmer (16, 16', 16") unter Angabe von Daten zu ihrer Identität zur Teilnahme an der Gewinnveranstaltung anmelden und den Teilnehmern (16, 16', 16") jeweils ein Identifikationscode zugewiesen wird, wobei die Identitätsdaten und/oder der Identifikationscode in wenigstens einer Teilnehmerdatenstruktur (32) in einer Auswerteeinrichtung (26) abgespeichert werden,
bei dem wenigstens eine Gewinnveranstaltungssendung von der Fernseh- oder Rundfunkstation (10) übertragen und von den Teilnehmern (16, 16', 16") empfangen wird,
bei dem in wenigstens einem Gewinnveranstaltungsabschnitt in der Gewinnveranstaltungssendung wenigstens eine zu beantwortende Frage gestellt wird,
bei dem Teilnehmer (16, 16', 16") jeweils eine Antwort auf die Frage in ein Mobilfunkendgerät (20, 20', 20") eingeben und die Antworten mit dem jeweiligen Identifikationscode an die Auswerteeinrichtung (26) über ein Kommunikationsnetz (22) übertragen werden, wobei jeweils zwischen Anmeldung und letzter Antwort eines Teilnehmers während der Gewinnveranstaltungssendung oder erster Antwort und letzter Antwort eines Teilnehmers während der Gewinnveranstaltungssendung kontinuierlich eine Datenverbindung von dessen Mobilfunkendgerät (20, 20', 20") in das Kommunikationsnetz (22) besteht, mit dem die Auswerteeinrichtung (26) verbunden ist,
bei dem die empfangenen Antworten zusammen mit der wenigstens näherungsweise erfassten Zeit ihrer Abgabe und/oder der Zeit ihres Empfangs und/oder der Reihenfolge ihres Empfangs entsprechend dem Identifikationscode als Antwortdaten in der Auswerteeinrichtung (26) gespeichert werden, und
bei dem nach einem vorgegebenen Zeitpunkt die gespeicherten Antwortdaten entsprechend der Qualität der jeweiligen Antwort und gegebenenfalls der jeweiligen Zeit der Abgabe und/oder der Zeit ihres Empfangs und/oder der Reihenfolge ihres Empfangs zur Ermittlung wenigstens eines Gewinners ausgewertet werden.

2. Verfahren zur Durchführung einer Gewinnveranstaltung mittels einer Fernseh- oder Rundfunkstation (10) und Mobilfunkendgeräten (20, 20', 20"),
bei dem sich Teilnehmer (16, 16', 16") unter Angabe von Daten zu ihrer Identität zur Teilnahme an der Gewinnveranstaltung anmelden und den Teilnehmern (16, 16', 16") jeweils ein Identifikationscode zugewiesen wird, wobei die Identitätsdaten und/oder der Identifikationscode in wenigstens einer Teilnehmerdatenstruktur (32) in einer Auswerteeinrichtung (26) abgespeichert werden,
bei dem wenigstens eine Gewinnveranstaltungssendung von der Fernseh- oder Rundfunkstation (10) übertragen und von den Teilnehmern (16, 16', 16") empfangen wird,
bei dem in wenigstens einem Gewinnveranstaltungsabschnitt in der Gewinnveranstaltungssendung wenigstens eine zu beantwortende Frage gestellt und von der Auswerteeinrichtung (26) über Mobilfunkendgeräte (20, 20', 20") von angemeldeten Teilnehmern eine Antwort abgefragt wird,
bei dem Teilnehmer (16, 16', 16") jeweils eine Antwort auf die Frage in ihr Mobilfunkendgerät (20, 20', 20") eingeben und die Antworten mit dem jeweiligen Identifikationscode an die Auswerteeinrichtung (26) übertragen werden,
bei dem die empfangenen Antworten zusammen mit der wenigstens näherungsweise erfassten Zeit ihrer Abgabe und/oder der Zeit ihres Empfangs und/oder der Reihenfolge ihres Empfangs entsprechend dem Identifikationscode als Antwortdaten in der Auswerteeinrichtung (26) gespeichert werden, und
bei dem nach einem vorgegebenen Zeitpunkt die gespeicherten Antwortdaten entsprechend der Qualität der jeweiligen Antwort und gegebenenfalls der jeweiligen Zeit der Abgabe und/oder der Zeit ihres Empfangs und/oder der Reihenfolge ihres Empfangs zur Ermittlung wenigstens eines Gewinners ausgewertet werden.

3. Verfahren nach Anspruch 1 oder 2,
**dadurch gekennzeichnet,**
**dass** wenigstens ein Teilnehmer (16, 16', 16") sich vor Beginn der Gewinnveranstaltungssendung anmeldet und Identifikationsdaten explizit eingibt.

4. Verfahren nach Anspruch 1 oder 2,
**dadurch gekennzeichnet,**
**dass** die Anmeldung in Verbindung mit der Abgabe der ersten Antwort erfolgt.

5. Verfahren nach einem der vorhergehenden Ansprüche,
**dadurch gekennzeichnet,**
**dass** die Identitätsdaten die Telefonnummer des Mobilfunkendgeräts (20, 20', 20") oder eine der Telefonnummer eindeutig zugeordnete Kennung umfassen.

6. Verfahren nach einem der vorhergehenden Ansprüche,
**dadurch gekennzeichnet,**
**dass** als Identifikationscode die Telefonnummer des Mobilfunkendgeräts (20, 20', 20") bzw. eine dieser zugeordnete Kennung verwendet wird.

7. Verfahren nach einem der vorhergehenden Ansprüche,
**dadurch gekennzeichnet,**
**dass** die Antworten in Form von Daten an die Auswerteeinrichtung (26) übertragen werden.

8. Verfahren nach einem der vorhergehenden Ansprüche,
**dadurch gekennzeichnet,**
**dass** zur Übermittlung der Antworten von wenigstens einem Mobilfunkendgerät (20, 20', 20") zu der Auswerteeinrichtung (26) in dem Kommunikationsnetz eine paketvermittelte Datenübertragung verwendet wird, bei der Übertragungsgebühren im Wesentlichen in Abhängigkeit von der übertragenen Datenmenge erhoben werden, wobei vorzugsweise ein Kommunikationsnetz (22) verwendet wird, das ein GPRS-, EGDE-, HSCSD- oder UMTS-Netz oder ein Netz nach einer Weiterentwicklung des UMTS-Netzes umfasst.

9. Verfahren nach einem der vorhergehenden Ansprüche,
**dadurch gekennzeichnet,**
**dass** nur Antworten berücksichtigt werden, die innerhalb einer vorgegebenen Zeitspanne nach der Übertragung der Frage oder der Abfrage der Antwort in das Mobilfunkendgerät (20, 20', 20") eingegeben werden oder bei einer Einrichtung (23) eines zur Übertragung verwendeten Kommunikationsnetzes (22) eingehen oder bei der Auswerteeinrichtung (26) empfangen werden.

10. Verfahren nach einem der vorhergehenden Ansprüche,
**dadurch gekennzeichnet,**
**dass** ein Eingabefeld zur Eingabe einer Antwort auf dem Mobilfunkendgerät (20, 20', 20") nur für eine vorgegebene Zeitspanne aktiviert wird.

11. Verfahren nach einem der vorhergehenden Ansprüche,
**dadurch gekennzeichnet,**
**dass** die Antworten bei deren Übertragung einen Zeitstempel erhalten, der der jeweiligen Antwort von einer Einrichtung eines Kommunikationsnetzes (22), über das Antworten an die Auswerteeinrichtung (26) übermittelt werden, insbesondere einer Basisstation oder einer Mobilvermittlungsstelle eines Mobilfunknetzes, bei Eintreffen der Antwort bei der Einrichtung hinzugefügt wird.

12. Verfahren nach einem der vorhergehenden Ansprüche,
**dadurch gekennzeichnet,**
**dass** die Abfrage der Antworten über WAP erfolgt, und
**dass** ein entsprechendes WAP-Portal bei Eintreffen einer Antwort einen Zeitstempel vergibt und zusammen mit der Antwort an die Auswerteeinrichtung übermittelt.

13. Verfahren nach einem der vorhergehenden Ansprüche,
**dadurch gekennzeichnet,**
**dass** zu wenigstens einem Zeitpunkt vor oder während der ersten zu beantwortenden Frage der Gewinnveranstaltung und nach Eingabe jeweils einer Antwort aktuelle Zeitdaten des Mobilfunkendgeräts (20, 20', 20") an die Auswerteeinrichtung (26) übertragen werden.

14. Verfahren nach einem der vorhergehenden Ansprüche,
**dadurch gekennzeichnet,**
**dass** während der Gewinnveranstaltungssendung und nachdem eine Frage gestellt wurde, die bisher zu der Frage gespeicherten Antwortdaten wiederholt ausgewertet werden und die Anzahl der Teilnehmer (16, 16', 16") angezeigt oder übertragen wird, die zu dem Zeitpunkt an der Gewinnveranstaltung teilnehmen.

15. Verfahren nach einem der vorhergehenden Ansprüche,
**dadurch gekennzeichnet,**
**dass** während der Gewinnveranstaltungssendung und nachdem eine Frage gestellt wurde, die bisher zu der Frage gespeicherten Antwortdaten wiederholt ausgewertet werden und die Anzahl der Teilnehmer (16, 16', 16") angezeigt oder übertragen wird, die die Frage bis dahin richtig oder falsch beantwortet haben.

16. Verfahren nach einem der vorhergehenden Ansprüche,
**dadurch gekennzeichnet,**
**dass** bei der Auswertung der Antwortdaten zunächst eine Statistik erstellt wird, wieviele Teilnehmer (16, 16', 16") eine Frage unzutreffend und/oder wieviele Teilnehmer (16, 16', 16") die Frage zutreffend beantwortet haben, und
**dass** eine Wertung einer zutreffenden oder unzutreffenden Antwort in Abhängigkeit von der Statistik erfolgt.

17. Verfahren nach einem der vorhergehenden Ansprüche,
**dadurch gekennzeichnet,**
**dass** bei der Auswertung der Antwortdaten Teams von Teilnehmern (16, 16', 16") gebildet werden, indem die Antworten von Teilnehmern (16, 16', 16") gemeinsam ausgewertet werden, die wenigstens ein das jeweilige Team definierendes Kriterium erfüllen.

18. Verfahren nach einem der vorhergehenden Ansprüche,
**dadurch gekennzeichnet,**
**dass** bei der Übermittlung der Antworten die Kennung der Mobilfunkzelle erfasst wird, in der sich das Mobilfunkendgerät befindet, und
**dass** bei der Auswertung der Antwortdaten Teams von Teilnehmern gebildet werden, indem die Antworten von Teilnehmern gemeinsam ausgewertet werden, deren Mobilfunkzellenkennungen wenigstens ein das Team definierendes Kriterium erfüllen.

19. Verfahren nach einem der vorhergehenden Ansprüche,
**dadurch gekennzeichnet,**
**dass** bei einem Gewinn eines Teilnehmer (16, 16', 16") dem Teilnehmer elektronisch ein Guthaben auf einem Konto gutgeschrieben wird.

20. Verfahren nach Anspruch 19,
**dadurch gekennzeichnet,**
**dass** das Guthaben dem Telekommunikationskonto des Teilnehmers (16, 16', 16") gut geschrieben wird.

21. Verfahren nach einem der vorhergehenden Ansprüche,
**dadurch gekennzeichnet,**
**dass** für die Teilnahme an der Gewinnveranstaltung eine Teilnahmegebühr oder für die Beantwortung jeweils einer Frage eine Antwortgebühr von einem Teilnehmerkonto abgebucht wird, und
**dass** bei einem Gewinn ein entsprechendes Guthaben auf dem Teilnehmerkonto gutgeschrieben wird.

22. Verfahren nach einem der vorhergehenden Ansprüche,
**dadurch gekennzeichnet,**
**dass** der Gewinner über das Mobilfunkendgerät (20, 20', 20") wenigstens ein Bild von sich an die Fernsehstation (10) übermittelt, und dass die Fernsehstation (10) das Bild überträgt.
